# EUROPEAN PATENT APPLICATION

(11) **EP 4 488 030 A2**
(43) Date of publication of application: **08.01.2025**
(21) Application number: 24186846.2
(22) Date of filing: 05.07.2024
(51) Int. Cl.: B29C 48/25, B29C 48/00, B29C 48/05, B29C 48/793, B29C 43/00, A47C 27/12, B29D 99/00, B68G 5/00, B29B 7/58, B68G 7/02, B68G 11/03, B29B 7/60

(54) **PE SPINNING FILLER AND ITS PRODUCTION EQUIPMENT**

(30) Priority: 06.07.2023 CN 202310823802
(71) Applicant: Hefeng (Qingdao) Home Textiles Co., Ltd., Qingdao (CN)
(72) Inventor: CHENG, Haitao, Heilongjiang Middle Road, Licang District, Qingdao, Shandong Pro, 615 (CN)
(74) Representative: Cabinet Netter

(57) **Abstract**

The present invention relates to the field of packaging filler technology, specifically a kind of spinning filler and its production equipment. The spinning filler includes at least two filler zones, each of which is formed by winding and stacking spinning threads. The hardness of each filler zone varies. The filler zones can be set in layers, in the same layer in different regions, or a combination of both,By utilizing multiple independent filler zones made up of layered spinning base layers, and subsequently assembling these zones with different hardnesses into a single unit, the present invention allows flexible control of the hardness and softness characteristics of different areas of the spinning filler. This maintains different softness and hardness characteristics from the inside out, improving the deformation smoothness of cushions for household decoration, and meeting the needs of various users.

## Description

### CROSS-REFERENCE TO RELATED APPLICATIONS

This is a U. S. patent application which claims the priority and benefit of Chinese Patent Application Number 202310823802 . 1, filed on July 06, 2023, the disclosure of which is incorporated herein by reference in its entirety.

### FIELD

The present invention relates to the field of packaging filler technology, specifically a kind of spinning filler and its production equipment.

### BACKGROUND

At present, there are various types of filler materials used in household decoration items such as pillows, sofas, and seats. These include traditional Chinese medicine materials like cassia seeds, wild chrysanthemum, and silkworm excrement; grain materials like buckwheat husk, rice bran, and cotton; and modern processed materials like porous vacuum cotton and slow rebound sponge, which have a high market penetration rate. However, existing filler materials often have a limited lifespan, losing elasticity and aging over time, especially synthetic fibers which are commonly used. After several months of use, they become compacted, deformed, and lose their elasticity, reducing both their lifespan and comfort, and deteriorating ventilation and hygiene conditions.

Therefore, industry professionals have provided a kind of spinning filler and its production equipment to address the issues presented in the background technology, particularly using PE material for better results.

### SUMMARY

The objective of the present invention is to provide a kind of spinning filler and its production equipment to solve the problems presented in the background technology.

To achieve the above objective, the present invention provides the following technical solution: a kind of spinning filler, which at least includes two filler zones. Each filler zone is formed by winding and stacking spinning threads, and each filler zone has different hardness. The filler zones can be set in layers or in the same layer in different regions or a combination of both.
Furthermore, the filler zones are formed by heating and melting spinning threads through a screw extrusion production device. After the spinning threads are formed, multiple groups of base layers are stacked and compressed into shape using a compression mold;
Further, in the case of regional division, each region is set to be at least 50 square centimeters; in the case of layering, the thickness of each layer is set to be at least 10 centimeters, and the density of each layer or each region is set to be between 30 kg/m³ and 100 kg/m³ , with the density difference between adjacent layers or regions set to at least 10%, or different shapes and materials of spinning threads are used. The hardness is set to 60-100 Newtons. Each layer or each region has different hardness and can be distinguished by different colors to identify different hardness layers and regions;
Furthermore, the hardness of each filler zone is determined by the thickness and density of the spinning threads of the filler base layer. During production, the screw extrusion production device first determines the thickness of the spinning threads, and then determines the density of the spinning thread winding diameter;

Further, the thickness of the spinning threads in each filler zone is determined by the extrusion head of the screw extrusion production device. By replacing the corresponding model of the extrusion head, the melted raw material is extruded into spinning threads of the corresponding thickness, and then the hardness of the spinning filler is determined based on the thickness of the spinning threads in each filler zone.

The production equipment for the PE spinning filler includes a support frame (1). The support frame (1) is equipped with a screw extrusion mechanism at the top, and a drive motor (2) is installed at the end output side of the screw extrusion mechanism. The screw extrusion mechanism includes an extrusion barrel (8) with a heating mechanism at one end, and the screw extrusion mechanism is connected to the heating mechanism via a discharge pipe (7).

The screw extrusion mechanism includes an extrusion barrel (8) installed on the support frame (1). The extrusion barrel (8) has a horizontal drive shaft (14) rotating inside it, and the horizontal drive shaft (14) has a screw blade (15) at one end. The other end of the extrusion barrel (8) facing the push end of the screw blade (15) is equipped with an extrusion head (10).

The heating mechanism includes a heating barrel (6) with a vertical drive shaft (11) rotating inside it. The vertical drive shaft (11) has multiple stirring arms (12) and a propeller blade (13) at the base. The stirring arms (12) have symmetrical stirring blades (18) that fit against the wall of the heating barrel (6).

Furthermore, the output end of the drive motor (2) is connected to a transmission sprocket A (3). The output end of the horizontal drive shaft (14) is connected to a transmission sprocket B (5), and transmission sprocket A (3) and transmission sprocket B (5) are connected via a transmission chain (4).

Furthermore, one end of the horizontal drive shaft (14) is equipped with a bevel gear B (17), and the base end of the vertical drive shaft (11) is equipped with a bevel gear A (16) that meshes with bevel gear B (17).

Furthermore, heating coils are installed inside the wall of the heating barrel (6), and multiple heating sleeves (9) are arranged at the end of the extrusion barrel (8) at equal intervals.

Furthermore, at least two sets of screw extrusion mechanisms are installed. The extrusion heads of the screw extrusion mechanisms can face the compression mold.

The production equipment for the PE spinning filler includes a support frame. The support frame is equipped with a screw extrusion mechanism at the top, and a drive motor is installed at the end output side of the screw extrusion mechanism. The screw extrusion mechanism includes an extrusion barrel with a heating mechanism at one end, and the screw extrusion mechanism is connected to the heating mechanism via a discharge pipe.

The screw extrusion mechanism includes an extrusion barrel installed on the support frame. The extrusion barrel has a horizontal drive shaft rotating inside it, and the horizontal drive shaft has a screw blade at one end. The other end of the extrusion barrel facing the push end of the screw blade is equipped with an extrusion head.

The heating mechanism includes a heating barrel with a vertical drive shaft rotating inside it. The vertical drive shaft has multiple stirring arms, and a propeller blade at the base. The stirring arms have symmetrical stirring blades that fit against the wall of the heating barrel.

In another aspect of the invention, the output end of the drive motor is connected to a transmission sprocket A. The output end of the horizontal drive shaft is connected to a transmission sprocket B, and transmission sprocket A and transmission sprocket B are connected via a transmission chain.

In another aspect of the invention, one end of the horizontal drive shaft is equipped with a bevel gear B, and the base end of the vertical drive shaft is equipped with a bevel gear A that meshes with bevel gear B.

In another aspect of the invention, heating coils are installed inside the wall of the heating barrel, and multiple heating sleeves are arranged at the end of the extrusion barrel at equal intervals.

In another aspect of the invention, at least two sets of screw extrusion mechanisms are installed. The extrusion heads of the screw extrusion mechanisms can face the compression mold. More than two sets of screw extrusion mechanisms can operate independently or simultaneously, or a few sets can be chosen to run to meet the requirements of different raw materials and different hardnesses of spinning threads.

The materials for the spinning threads in this technical solution can be set as needed. They can be PE, POE, PA, TPE, PP, or a mixture of two or more of these materials. PE is the main material, POE has good elasticity, TPE is soft to the touch, and PP or nylon has high hardness. The proportions of different materials or composite materials can also be adjusted.

### Advantages:

Compared with the existing technology, the beneficial effects of the present invention are:
1. The invention uses multiple layers of spinning base layers to form independent filler zones. By stacking and assembling filler zones with different hardnesses, the hardness and softness characteristics of different areas of the spinning filler can be flexibly controlled, maintaining different softness and hardness characteristics from the inside out. This improves the deformation smoothness of cushions for household decoration, meeting the needs of various users. Additionally, the elastic shaping, non-deformable, and antibacterial properties of the PE spinning threads maintain the resilience, aging resistance, and service life of the filler, making it more popular and widely used.
2. The invention uses multiple layers of spinning base layers to form independent filler zones. On one hand, it has simple and convenient production characteristics, utilizing the interlayer stacking properties to process PE spinning fillers, reducing the intensity of one-time molding. On the other hand, the interlayer stacking and regional settings of the multi-layer base layers allow flexible control of the regional softness of the PE spinning filler, providing a variety of softness characteristics as needed. Each layer or region can also be distinguished by different colors, with each hardness represented by a different color.

### BRIEF DESCRIPTION OF THE DRAWINGS

The following is a further explanation of the present invention in conjunction with the accompanying drawings and embodiments, wherein:
FIG. 1 is a schematic diagram of partition assembly of the spinning filler in Embodiment 1;
FIG. 2 is Structural schematic diagram of the spinning filler in Embodiment 2;
FIG. 3 is Schematic diagram of partition in the variation of Embodiment 2;
FIG. 4 is Structural schematic diagram of the variation of the spinning filler in Embodiment 1;
FIG. 5 is Another structural schematic diagram of the variation of the spinning filler in Embodiment 1;
FIG. 6 is Structural schematic diagram of the spinning filler in Embodiment 6;
FIG. 7 is Plan view of the production equipment for the spinning filler.
FIG. 8 is Another plan view of the production equipment for the spinning filler;
FIG. 9 Enlarged schematic diagram of section A in FIG. 7;
FIG. 10 Structural schematic diagram of the stirring blade in the production equipment for the spinning filler

Reference numerals: 100: First Filler Zone;200: Second Filler Zone;300: Third Filler Zone;400: Fourth Filler Zone;500: First Headrest Zone;600: Second Headrest Zone;700: Third Headrest Zone;800: Fourth Headrest Zone;900: First Mattress Zone;1000: Second Mattress Zone;1100: Third Mattress Zone;1200: Fourth Mattress Zone;1300: First Convertible Pillow;1301: First Convertible Headrest Zone A;1302: First Convertible Headrest Zone B;1400: Second Convertible Pillow;1401: Second Convertible Headrest Zone A;1402: Second Convertible Headrest Zone B;1403: Second Convertible Headrest Zone C;1500: First Convertible Mattress;1501: First Convertible Mattress Zone A;1502: First Convertible Mattress Zone B;1503: First Convertible Mattress Zone C;1600: First Cushion Zone;1700: Second Cushion Zone;1800: Third Cushion Zone;1: Support Frame;2: Drive Motor;3: Transmission Sprocket A;4: Transmission Chain;5: Transmission Sprocket B;6: Heating Barrel;7: Discharge Pipe;8: Extrusion Barrel;9: Heating Sleeves;10: Extrusion Head;11: Vertical Drive Shaft;12: Stirring Arms;13: Propeller Blade;14: Horizontal Drive Shaft;15: Screw Blade;16: Bevel Gear A;17: Bevel Gear B;18: Stirring Blades.

.

### DETAILED DESCRIPTION

### Embodiment 1:

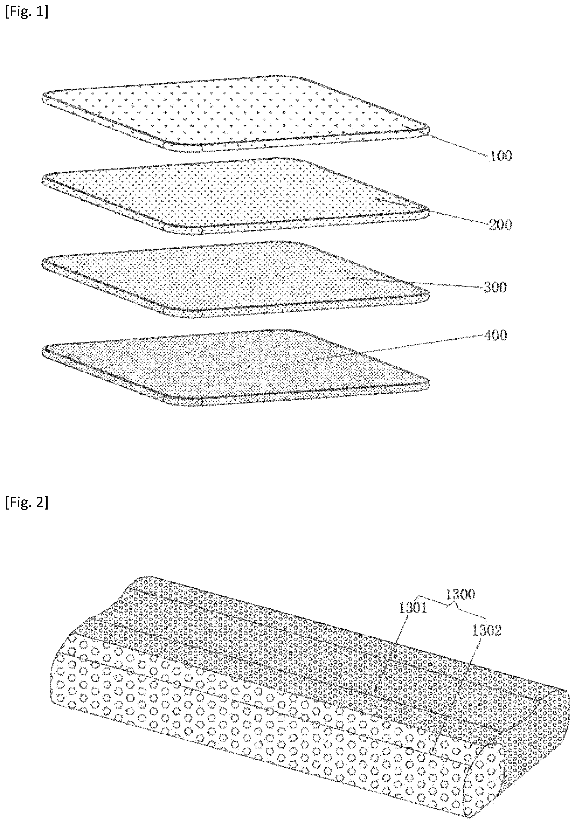

Refer to FIG. 1. In this embodiment of the present invention, a PE spinning filler includes, but is not limited to, a first filler zone 100, a second filler zone 200, a third filler zone 300, and a fourth filler zone 400.

The first filler zone 100, the second filler zone 200, the third filler zone 300, and the fourth filler zone 400 are all made of PE spinning threads.

The softness and hardness of the first filler zone 100, the second filler zone 200, the third filler zone 300, and the fourth filler zone 400 vary, with the softness and hardness increasing sequentially.
The first filler zone 100, the second filler zone 200, the third filler zone 300, and the fourth filler zone 400 each consist of multiple layers, which are stacked together;
The first filler zone 100, the second filler zone 200, the third filler zone 300, and the fourth filler zone 400 are all formed by heating and melting spinning threads using a screw extrusion production device. After the spinning threads are formed, they are wound into multiple independent base layers using a winding device, and then these base layers are stacked and compressed together using a compression mold;
The softness and hardness of the first filler zone 100, the second filler zone 200, the third filler zone 300, and the fourth filler zone 400 are determined by the thickness and density of the spinning threads of the filler base layer;

The thickness of the spinning threads in the first filler zone 100, the second filler zone 200, the third filler zone 300, and the fourth filler zone 400 is determined by the extrusion head of the screw extrusion production device.

The density of the spinning threads in the first filler zone 100, the second filler zone 200, the third filler zone 300, and the fourth filler zone 400 is determined by the winding diameter set by the winding device.

During production, the screw extrusion production device first determines the thickness of the spinning threads, and then the winding device determines the density of the spinning thread winding diameter.

The thickness of the spinning threads in the first filler zone 100, the second filler zone 200, the third filler zone 300, and the fourth filler zone 400 is determined by the extrusion head of the screw extrusion production device. By replacing the corresponding model of the extrusion head, the melted PE raw material is extruded into spinning threads of the corresponding thickness, and then the softness and hardness of the PE spinning filler are determined based on the thickness of the spinning threads in each filler zone.

### Embodiment 2:

Refer to FIGS. 2-3. In this embodiment of the present invention, a spinning filler made of any two or three materials from PE, POE, PA, TPE, and PP includes a first convertible headrest zone A1301 and a first convertible headrest zone B1302. By setting the first convertible pillow 1300 into two independent regions, the pillow can be kept with one side hard and the other side soft, better suiting the user's preferences.

Similarly, the second convertible pillow 1400, composed of a second convertible headrest zone A1401, a second convertible headrest zone B1402, and a second convertible headrest zone C1403, can be set into three independent regions, allowing the pillow to have a hard middle and soft sides, better suiting the user's preferences. Different colors can be set for each region to distinguish them.

### Embodiment 3:

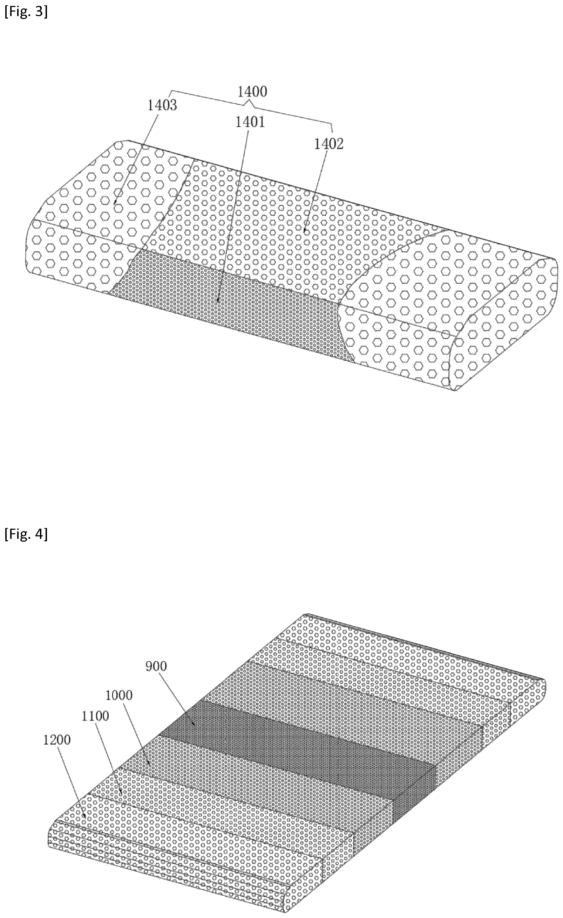

Refer to FIGS. 4-5. In this embodiment of the present invention, a spinning filler made of any two or three materials from PE, POE, PA, TPE, and PP is a variation of claim 1. The mattress includes a first mattress zone 900, a second mattress zone 1000, a third mattress zone 1100, and a fourth mattress zone 1200. The second, third, and fourth mattress zones are arranged symmetrically on both sides of the first mattress zone 900, with the density decreasing from the inside out. This design allows the mattress to have a hard middle and soft sides, with the first mattress zone 900 better supporting the user's waist, the second mattress zone 1000 better supporting the user's hips and back, the third mattress zone 1100 better supporting the user's shoulders and legs, and the fourth mattress zone 1200 better supporting the user's head and feet. This design improves the user's comfort by distributing pressure evenly.

In this embodiment, the spinning threads extruded by the screw extruder can be wound into different mattress styles, such as the first convertible mattress 1500, composed of a first convertible mattress zone A1501, a first convertible mattress zone B1502, and a first convertible mattress zone C1503, allowing the mattress to have a hard middle and soft sides for better user comfort.

### Embodiment 4:

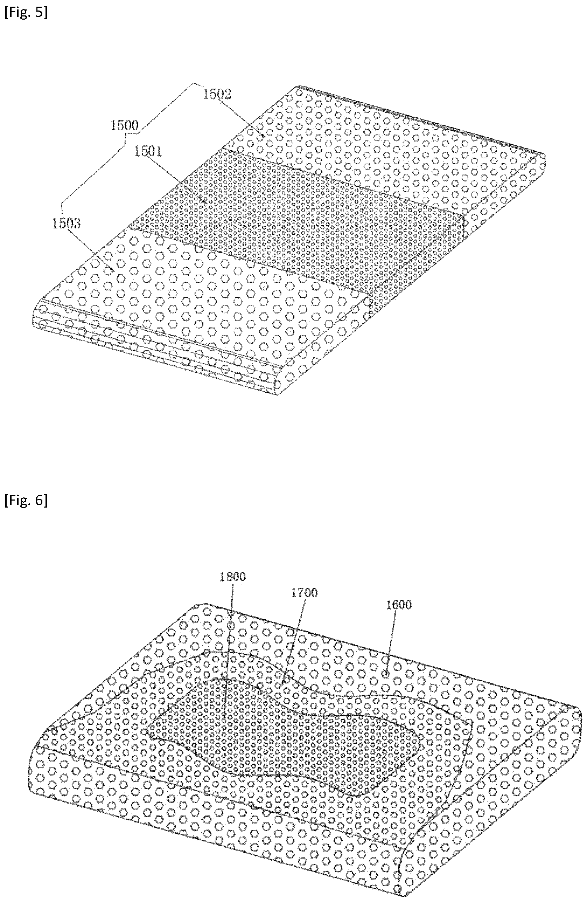

Refer to FIG. 6. In this embodiment, the spinning filler differs from Embodiment 1 in that the extruded spinning threads are wound into a cushion style. The cushion includes a first cushion zone 1600, a second cushion zone 1700, and a third cushion zone 1800, with the first cushion zone 1600 wrapping around the second cushion zone 1700, and the second cushion zone 1700 wrapping around the third cushion zone 1800. This design allows the cushion to have a hard middle and soft outer layers, improving the uniformity of the pressure distribution and user comfort.

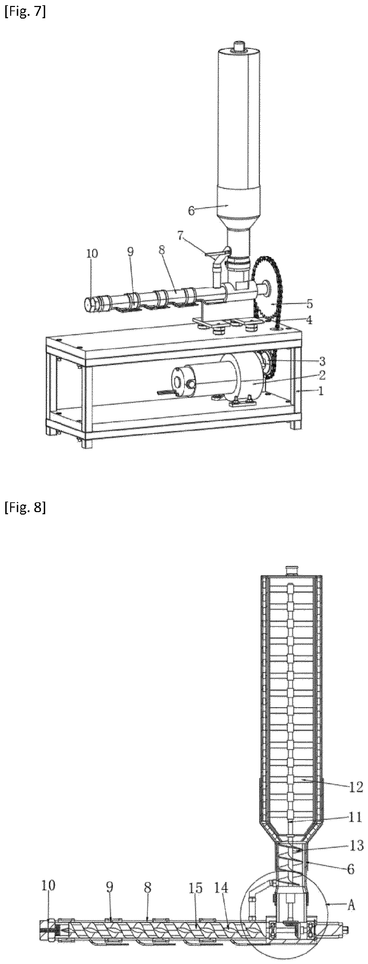

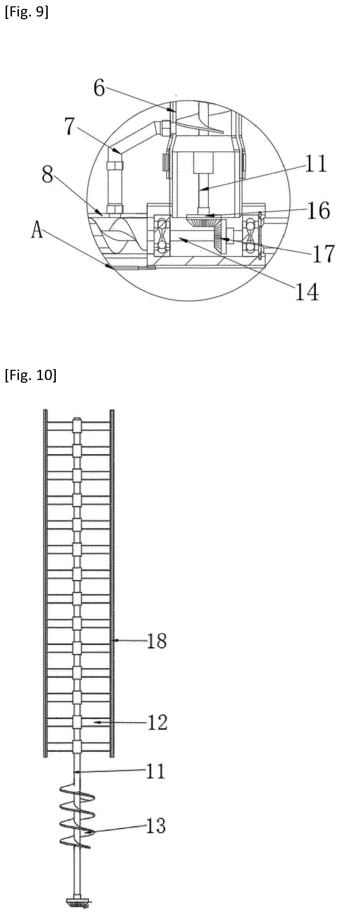

Refer to FIGS. 7-10. In the embodiment of the present invention, the production equipment for the PE spinning filler includes a support frame 1. The support frame 1 is equipped with a screw extrusion mechanism at the top, and a drive motor 2 is installed at the end output side of the screw extrusion mechanism. The output end of the drive motor 2 is connected to a transmission sprocket A3, which is connected to a transmission sprocket B5 on one end of the horizontal drive shaft 14 via a transmission chain 4.

The screw extrusion mechanism includes an extrusion barrel 8, connected to a heating mechanism at one end, and connected to the heating mechanism via a discharge pipe 7. The heating mechanism includes a heating barrel 6 with a vertical drive shaft 11 and multiple stirring arms 12. The vertical drive shaft 11 is connected to the base of the heating barrel 6 with a propeller blade 13. The stirring arms 12 have symmetrical stirring blades 18 that fit against the wall of the heating barrel 6.

In operation, the raw materials are fed into the heating barrel 6, where they are melted by the heating coils. The drive motor 2 is activated, rotating transmission sprocket A3, which drives transmission sprocket B5 through the transmission chain 4. This rotation drives the horizontal drive shaft 14, which in turn drives the screw blade 15 and pushes the melted material through the extrusion head 10 to form spinning threads.

Simultaneously, the vertical drive shaft 11 rotates within the heating barrel 6, driven by the meshed bevel gears 16 and 17. This rotation moves the stirring arms 12 and stirring blades 18, ensuring the raw materials are uniformly mixed and preventing them from sticking to the heating barrel's walls. The melted material is then pushed through the discharge pipe 7 into the extrusion barrel 8, where it is continuously heated by the heating sleeves 9 and extruded through the extrusion head 10.

The heating coils inside the wall of the heating barrel 6 act as the heating element, processing the PE spinning raw materials. The spinning raw materials can include polyester yarn, PVC, gel, and their mixtures. The multiple heating sleeves 9 arranged at equal intervals at the end of the extrusion barrel 8 maintain the molten state of the PE spinning raw materials, improving the smoothness of the spinning process.

The above descriptions are the preferred embodiments of the present invention. However, the scope of the present invention is not limited to these embodiments. Any variations or modifications based on the technical solutions and inventive concepts disclosed in the present invention should be covered within the scope of the present invention.

## Claims

1. A kind of spinning filler, **characterized in that** it at least includes two filler zones, each filler zone is formed by winding and stacking spinning threads, and each filler zone has different hardness. The filler zones can be set in layers or in the same layer in different regions or a combination of both.

2. The spinning filler according to claim 1, **characterized in that** the filler zones are formed by heating and melting spinning threads through a screw extrusion production device, and after the spinning threads are formed, multiple groups of base layers are stacked and compressed into shape using a compression mold.

3. The spinning filler according to claim 1, **characterized in that** in the case of regional division, each region is set to be at least 50 square centimeters; in the case of layering, the thickness of each layer is set to be at least 10 centimeters, and the density of each layer or each region is set to be between 30 kg/m³ and 100 kg/m³, with the density difference between adjacent layers or regions set to at least 10% or different shapes and materials of spinning threads; the hardness is set to 60-100 Newtons; each layer or each region has different hardness and can be distinguished by different colors.

4. The spinning filler according to claim 1, **characterized in that** the hardness of each filler zone is determined by the thickness and density of the spinning threads of the filler base layer. During production, the screw extrusion production device first determines the thickness of the spinning threads, and then determines the density of the spinning thread winding diameter.

5. The spinning filler according to claim 1, **characterized in that** the thickness of the spinning threads in each filler zone is determined by the extrusion head of the screw extrusion production device. By replacing the corresponding model of the extrusion head, the melted raw material is extruded into spinning threads of the corresponding thickness, and then the hardness of the spinning filler is determined based on the thickness of the spinning threads in each filler zone.

6. The production device for the spinning filler according to claim 1, **characterized in that** the production device for the spinning filler includes a support frame (1), the support frame (1) is equipped with a screw extrusion mechanism, and a drive motor (2) is installed at the end output side of the screw extrusion mechanism, the screw extrusion mechanism includes an extrusion barrel (8) with a heating mechanism at one end, the extrusion barrel (8) is connected to the heating mechanism via a discharge pipe (7).

7. The production device according to claim 6, **characterized in that** the screw extrusion mechanism includes an extrusion barrel (8) installed on the support frame (1), the extrusion barrel (8) has a horizontal drive shaft (14) rotating inside it, the horizontal drive shaft (14) has a screw blade (15) at one end, and an extrusion head (10) at the other end facing the push end of the screw blade (15).

8. The production device according to claim 6, **characterized in that** the heating mechanism includes a heating barrel (6) with a vertical drive shaft (11) rotating inside it, the vertical drive shaft (11) has multiple stirring arms (12) and a propeller blade (13) at the base.

9. The production device according to claim 6, **characterized in that** the heating barrel (6) has heating coils inside its wall, and the extrusion barrel (8) has multiple heating sleeves (9) at its end.

10. The production device according to claim 6, **characterized in that** the screw extrusion mechanism includes at least two sets of screw extrusion mechanisms, each with its own extrusion head facing the compression mold.
